# EUROPÄISCHE PATENTSCHRIFT

(11) **EP 0 607 541 B1**
(45) Veröffentlichungstag und Bekanntmachung des Hinweises auf die Patenterteilung: **17.01.1996**
(21) Anmeldenummer: 93119400.5
(22) Anmeldetag: 02.12.1993
(51) Int. Cl.: B21B 31/12

(54) **Kalander und Anlage zum Kalandrieren**
Calender and calendering installation
Calandre et installation de calandrage

(30) Priorität: 18.01.1993 DE 4301096
(43) Veröffentlichungstag der Anmeldung: 27.07.1994
(73) Patentinhaber: PAUL TROESTER MASCHINENFABRIK, D-30519 Hannover (DE)
(72) Erfinder: Seidler, Ekkehard, D-30177 Hannover (DE); Pohl, Hans-Joachim, D-30173 Hannover (DE)
(74) Vertreter: Junius, Walther, Dr.

(56) Entgegenhaltungen:
- EP-A- 0 069 890
- EP-A- 0 112 981
- DE-B- 1 291 715
- DE-C- 559 824
- FR-A- 2 565 891
- GB-A- 1 158 814
- US-A- 4 037 451
- PATENT ABSTRACTS OF JAPAN vol. 6, no. 249 (M-177)(1127) 8. Dezember 1982 & JP-A-57 146 411 (KAWASAKI) 9. September 1982
- PATENT ABSTRACTS OF JAPAN vol. 13, no. 405 (M-868)(3753) 7. September 1989 & JP-A-01 148 407 (HITACHI) 9. Juni 1989

## Beschreibung

Die Erfindung betrifft einen Kalander, bestehend aus einem aus zwei parallel zueinander aufgestellten Ständern aufgebauten Maschinengestell, in welchem mindestens zwei durch mindestens einen Motor angetriebene Walzen mittels Lagern gelagert sind, von denen die Lager in Lagerkörpern gelagert sind, die in den Ständern unter der Einwirkung äußerer Kräfte verschiebbar sind, bei dem Teil jedes Ständers eine Traverse ist, die nach Lösen von Befestigungsmitteln aus dem Ständer herausbewegbar ist und dann einen Freiraum im Ständer hinterläßt, durch den die Lagerkörper mindestens einer Walze zusammen mit der Walze aus dem Ständer herausnehmbar und einbringbar sind sowie mit einem solchen Kalander ausgestattete Anlagen zum Kalandrieren, bestehend aus einem Vorratslager für mindestens eine Austauschwalze sowie einer Wechselvorrichtung für die auszutauschende Walze.

Ein ähnlicher Kalander ist aus der US-A-40 37 451 bekannt geworden, die ein Glättwalzwerk zeigt, deren Walzen horizontal nebeneinander angeordnet sind. Das Kopfstück des Kalanderständers ist lösbar an den übrigen Holmen des Kalanders befestigt und kann für einen Walzenwechsel entfernt werden. In ähnlicher Weise ist ein Kalander nach der DE-B-12 91 715 aufgebaut, bei der die Kopfstücke des Kalanders mittels verfahrbarer Hebevorrichtungen seitlich verfahrbar sind, wobei die Kopfstücke bei einem Walzenwechsel seitlich weggefahren werden, so daß die vertikal übereinander angeordneten Walzen nach oben hin aus dem Ständer herausgezogen werden können. Die Kopfstücke sind dabei schwalbenschwanzförmig ausgebildet und greifen mit ihren seitlichen Vorsprüngen hinter Gegenlager an den vertikalen Kalanderholmen. Die Kopfstücke tragen eine Spannvorrichtung, die sich auf den obersten Lagerkörper abstützt und die die schwalbenschwanzförmigen Vorsprünge des Kopfteiles in die entsprechend ausgebildeten Vorsprünge am oberen Ende der vertikalen Kalanderholme hineindrückt.

Ein weiterer Kalander mit vertikal übereinander angeordneten Walzen, von denen die oberste Walze in seitlich in Schienen verfahrbaren Lagern gelagert ist, ist aus der FR-A-25 65 891 bekannt. Hier wird die mittlere Walze dadurch ausgewechselt, daß sie mit einer besonderen Vorrichtung in die Walzenebene seitlich eingeschwenkt wird.

Bei den schweren Kalandern der Gummi- und Kunststoffindustrie ist ein solcher Walzenwechsel aufwendig und erfordert längere Stillstandszeiten des Kalanders, in denen in der ganzen Produktionsstraße nicht gearbeitet werden kann, deren Bestandteil dieser Kalander ist.

Die Erfindung vermeidet die Nachteile des Standes der Technik. Es ist die Aufgabe der vorliegenden Erfindung, auch bei schweren Kalandern mit einfachen Mitteln einen sehr schnellen Walzenwechsel, insbesondere von Profilwalzen, vornehmen zu können.

Die Erfindung besteht darin, daß die Traverse um eine Achse verschwenkbar ist, daß Mittel für das Befestigen des der Achse abgewandten Endes der Traverse am Ständer vorgesehen sind und daß an jeder Traverse ein Servomotor als Verschwenkmotor angreift, der sich am Ständer abstützt.

Durch die Möglichkeit der Verschwenkung der Traverse läßt sich der Walzenwechsel sehr schnell vornehmen, denn durch diese Verschwenkbarkeit der Traverse läßt sich der Kalanderständer sehr schnell öffnen und nach dem Walzenwechsel auch sehr schnell wieder schließen, wobei die Festigkeit des Kalanderständers nicht beeinträchtigt wird.

Die Traversen können dabei Kopfstücke der Ständer oder Teile der vertikalen Holme der Ständer sein.

Die Befestigung der Traversen an ihrem freien Ende kann vorteilhafterweise dadurch erfolgen, daß das Mittel für das Befestigen des der Achse abgewandten Endes der Traverse am Ständer ein vorzugsweise kegeliger Bolzen oder Keil ist, der in ein Loch im Ständer einschiebbar ist.

Um den Vorgang des Einschiebens und den Vorgang des Herausziehens schnell und mechanisiert ablaufen zu lassen, ist es zweckmäßig, daß an jeder Traverse oder am Ständer ein den Bolzen oder Keil verschiebender Servomotor angeordnet ist.

Im allgemeinen haben Profilwalzen im Kalander einen Antrieb entweder direkt von einem Motor oder über ein Getriebe. Hierbei ist es zweckmäßig, wenn eine Kupplung mit verschieb- oder verschwenkbaren Kupplungselementen zwischen der zu wechselnden Walze und deren Antrieb angeordnet ist. Die verschiebbaren oder verschwenkbaren Kupplungselemente werden dabei zweckmäßigerweise über eine hydraulische Betätigungsvorrichtung, z.B. mittels einer Kolben-Zylinder-Einheit betätigt werden, so daß der Kupplungsvorgang sehr schnell und mechanisiert ausgeführt werden kann.

Weiterhin ist es vorteilhaft, wenn zwischen der zu wechselnden Walze und einer Vorrichtung zum Zu- und Abführen eines Temperiermittels Verschlußkupplungen mit Rückschlagventilen angeordnet sind. Auch hier kann für die Betätigung der Verschlußkupplungen eine Kolben-Zylinder-Einheit Verwendung finden.

Durch die Verwendung derartiger Servomotore, vorzugsweise in Form von Kolben-Zylinder-Einheiten, besteht die Möglichkeit, den ganzen Vorgang des Walzenwechsels in automatisierten Schritten ablaufen zu lassen. Automatisiert werden die die Traversen sichernden Bolzen für einen Wechselvorgang herausgezogen, dann die Traversen verschwenkt, gleichzeitig die Kupplungen gelöst, dann die Greifer an die Lagerkörper herangefahren und ihre Befestigungsmittel an den Lagerkörpern befestigt, wonach die Lagerkörper mitsamt der Walze aus dem Ständer herausgeschoben oder herausgezogen werden, seitlich des Kalanders abgesetzt werden und wo dann die Befestigungsmittel der Greifer von den Lagerkörpern gelöst werden. Sodann werden die Greifer, ggf. automatisch, zu den Lagerkörpern der bereitstehenden Austauschwalze verbracht, ihre Befestigungsmittel an den Lagerkörpern der Austauschwalze befestigt, die Austauschwalze zum Kalanderständer bewegt. Dort werden die Lagerkörper durch den von den verschwenkten oder verschobenen Traversen belassenen Freiraum in den Kalanderständer eingeführt, wonach die Greifer von den Lagerkörpern gelöst werden. Anschließend werden die Traversen in ihre Schließstellung zurückbewegt und gleichzeitig die Kupplungsteile wieder ineinander eingekuppelt.

Für Anlagen zum Kalandrieren mit austauschbaren Walzen, mit einem Vorratslager für mindestens eine Austauschwalze sowie mit einer Wechselvorrichtung für die auszutauschende Walze gibt es zwei besonders günstige Ausführungsformen:
Die eine besteht darin, daß die Wechselvorrichtung eine Hebevorrichtung ist, daß die Traversen Kopfstücke der Ständer sind und um eine Achse verschwenkbar sind, und daß oberhalb des Kalanders die Hebevorrichtung angeordnet ist, deren Hebemittel an die Lagerkörper ankoppelbar sind, die an ihren Enden als Befestigungsmittel Hülsen und Tragzapfen aufweisen, welche in eine in ihrem Querschnitt T-förmige Öffnung einfahrbar sind, wobei die Tragzapfen um 90° in eine Stellung drehbar sind, in der die Tragzapfen hinter Vorsprünge fassen, die durch die T-Form der Öffnung gebildet sind.

Die andere Ausführungsform besteht darin, daß die Wechselvorrichtung eine Verschiebevorrichtung ist, die Mittel zum Ergreifen der Lagerkörper aufweist, daß die Traverse Teile der vertikalen Holme der Ständer sind und um eine Achse verschwenkbar sind, daß die Verschiebevorrichtung seitlich an den Lagerkörpern angreift, und daß eine verschieb- oder verfahrbare Vorrichtung vorgesehen ist, auf die die Lagerkörper heraufschiebbar sind und die die Lagerkörper von unten abstützt.

Das Wesen der Erfindung ist nachstehend anhand von in der Zeichnung schematisch dargestellten Ausführungsbeispielen näher erläutert. Es zeigen:
- Fig. 1: eine perspektivische Darstellung eines Zweiwalzen-Kalanders mit verschwenkbaren Kopfstücken der Ständer in Betriebsstellung,
- Fig. 2: den Kalander der Fig. 1 in Walzenwechselstellung,

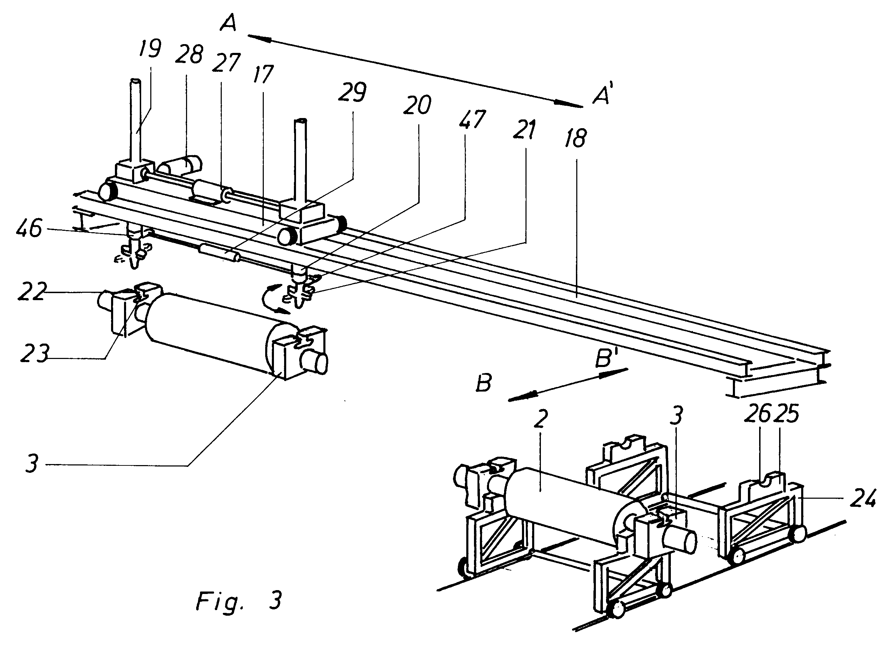

- Fig. 3: eine Wechselvorrichtung in einer Anlage zum Kalandrieren,
- Fig. 4: eine weitere Wechselvorrichtung für eine Anlage zum Kalandrieren,
- Fig. 5: einen Kalander, bei dem ein Teil eines vertikalen Holmes des Ständers die Traverse bildet, im Betriebszustand,
- Fig. 6: im Zustand des Wechselns der Walze,
- Fig. 7: eine Ansicht der Ankopplung des Antriebes an die zu wechselnde Walze.

Der Kalander besteht aus zwei Ständern 1, die zwei (oder mehr) Walzen 2 mit deren Lagerkörpern 3 in einer fensterartigen Öffnung 4 des rahmenförmigen Ständers 1 lagern. Der Ständer 1 weist eine im Ständer untergebrachte Stellvorrichtung 5 auf, welche auf die benachbarten Lagerkörper 3 wirkt und die eine Walze gegen die andere Walze 2 anstellt. Die Lagerkörper 3 nehmen das Walzenlager 6 auf, welches die Walzenzapfen 7 umschließt.

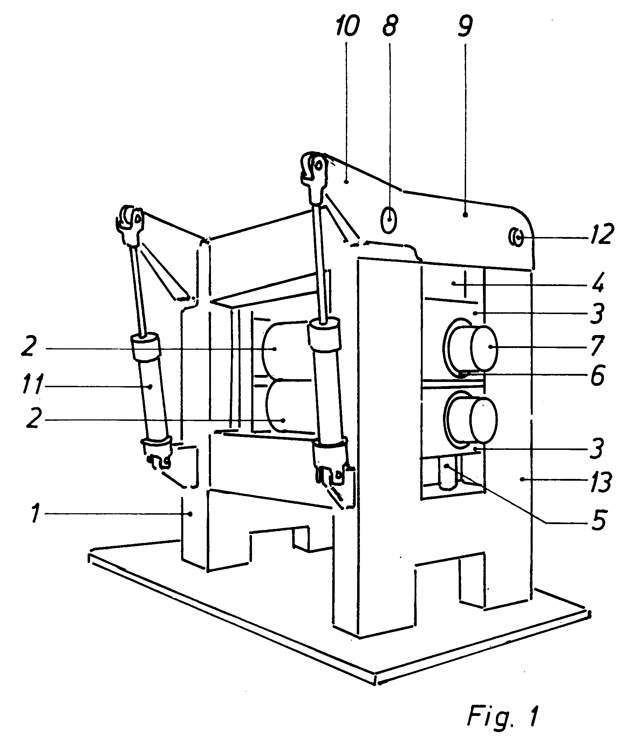

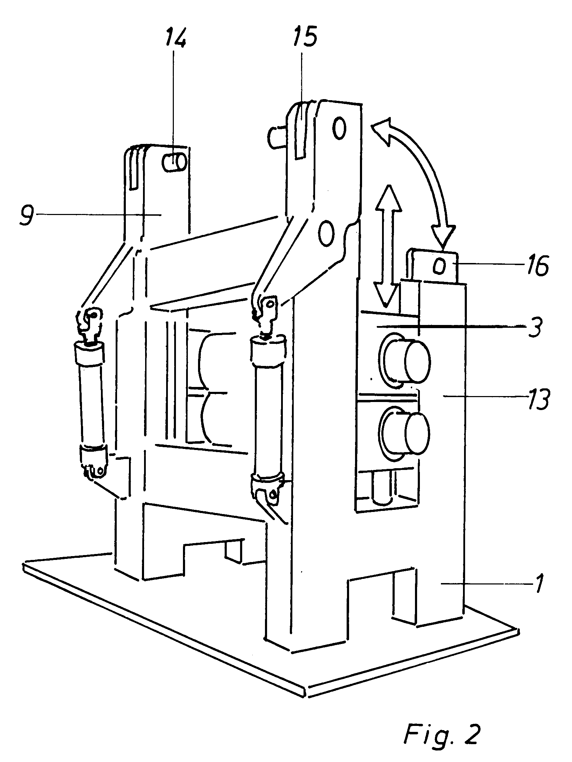

Das Kopfstück des Ständers 1 ist als eine um die Achse 8 verschwenkbare Traverse 9 ausgebildet, welche mit einem Verschwenkhebel 10 versehen ist, an welchem ein am Ständer 1 angelenkter hydraulischer Servomotor 11 angreift, welcher die Traverse 9 aus ihrer in Fig. 1 dargestellten Betriebsstellung in die in Fig. 2 dargestellte Offenstellung verschwenkt. In der Betriebsstellung ist die Traverse 9 durch einen Bolzen 12 gesichert, welcher durch ein Loch in der Traverse 9 und ein Loch in dem vertikalen Holm einschiebbar ist und zweckmäßig von kegeliger Gestalt ist. Eine Verschiebevorrichtung für den Bolzen besteht aus einem Servomotor 14, der an der Traverse 9 angebracht ist. Die Traverse 9 ist an ihrem Ende mit einer Nut 15 versehen, in welche das als Feder 16 geformte Ende des vertikalen Holmes 13 des Ständers 1 im Betriebszustand eingreift.

Nach Hochschwenken der Traverse 9 können die beiden Lagerkörper 3 mit der oberen Walze 2 nach oben hin herausgehoben werden, um den Walzenwechsel durchzuführen.

Dieses Herausheben erfolgt ebenso wie das spätere Hereinsetzen der auszuwechselnden Walze mit Hilfe einer Hubvorrichtung, deren Hubwagen 17 auf der Brücke 18 läuft. Der Hubwagen 17 weist zwei Hebevorrichtungen auf, die durch Spindelhubgetriebe 19 oder andere Servomotore gebildet sind. Die Hubspindeln 20 dieser Spindelhubgetriebe weisen an ihren Enden als Befestigungsmittel Hülsen 46 und Tragzapfen 21 auf, welche in eine in ihrem Querschnitt T-förmige Öffnung 22 einfahrbar sind. Die Tragzapfen 20 sind um 90° drehbar in eine Stellung, in der die Tragzapfen 21 hinter Vorsprünge 23 fassen, die durch die T-Form der Öffnung 22 gebildet sind. Nach dem Einfahren der Tragzapfen 21 in die Öffnung 22 werden die Lagerkörper durch Drehen der Tragzapfen 21 um 90° erfaßt und können nun mittels der Spindelhubgetriebe 19 angehoben und aus den Kalanderständer 1 herausgehoben werden. Die Walze 2 mitsamt den Lagerkörpern 3 werden von dem Hubwagen 17 zu Lagergestellen in Form von Transportwagen 24 gefahren. Das Walzenaggregat wird hier auf die Transportwagen 24 abgesetzt. Die Transportwagen tragen zwei Lagerböcke 25 mit einer halbkreisförmigen Ausnehmung 26, die aus Weichmetall hergestellt bzw. zur Zapfenschonung ausgekleidet ist, in der die Walzenzapfen 7 so zu liegen kommen, daß zwischen den beiden Lagerböcken 25 die Walze 2 befindlich ist, während die Lagerkörper 3 außerhalb der Lagerböcke 25 zu liegen kommen.

Um die Anlage automatisieren zu können, ist an dem Hubwagen 17 ein Fahrantriebsmotor 28 vorgesehen. Die Hubspindeln 20 tragen am unteren Ende drehbar gelagerte Hülsen 46, an denen die Tragzapfen 21 befestigt sind. Die Hülsen 46 besitzen Hebel 47, die von einem Servomotor 29, vorzugsweise einem Spindelhubzylinder, betätigt werden. Mit Hilfe des Servomotors 29 und entsprechender Schubstangen wird an den Hülsen 46 die 90°-Drehung der Tragzapfen 21 bewirkt.

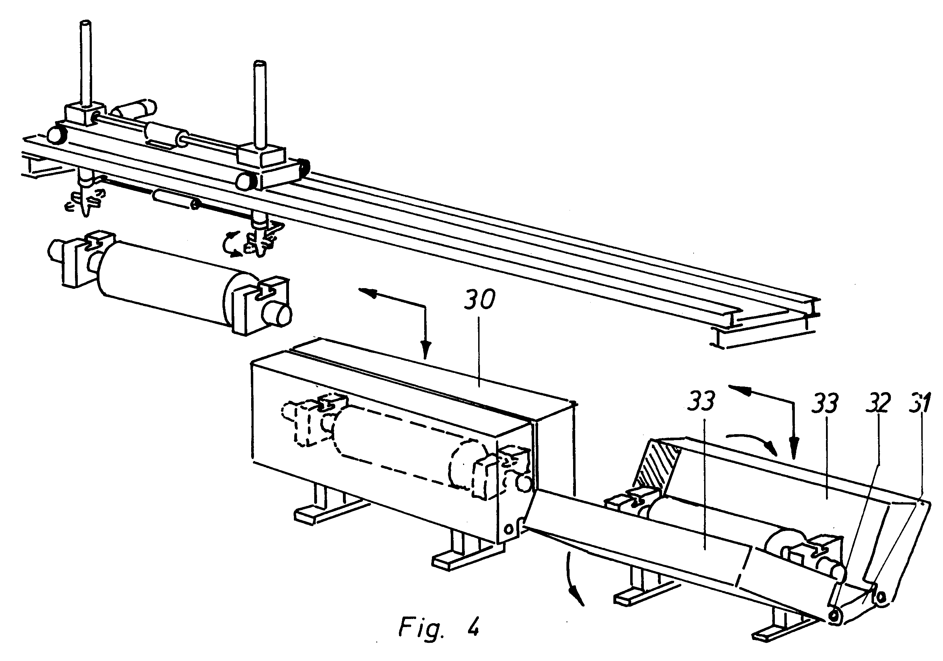

Im Ausführungsbeispiel der Fig. 4 sind anstelle der Transportwagen 24 mit einer Heizung ausgestattete Behälter 30 vorgesehen, deren Boden 31 Gelenke 32 für Abdeckhaubenhälften 33 tragen. Jede Abdeckhaubenhälfte bildet eine volle Seitenwand, die Hälfte des Deckels und zwei Hälften der Stirnseiten des Behälters 30. Bei geöffneten Abdeckhaubenhälften kann das aus der Walze 2 und den beiden Lagerkörpern 3 bestehende Aggregat herausgenommen werden bzw. eingelegt werden.

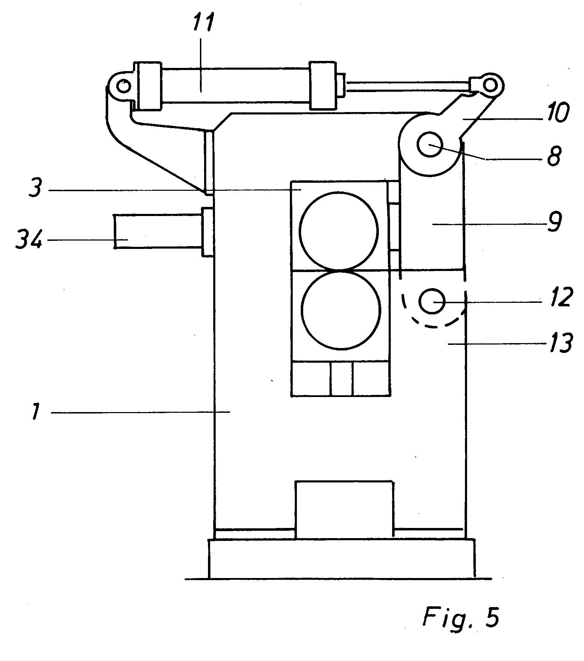

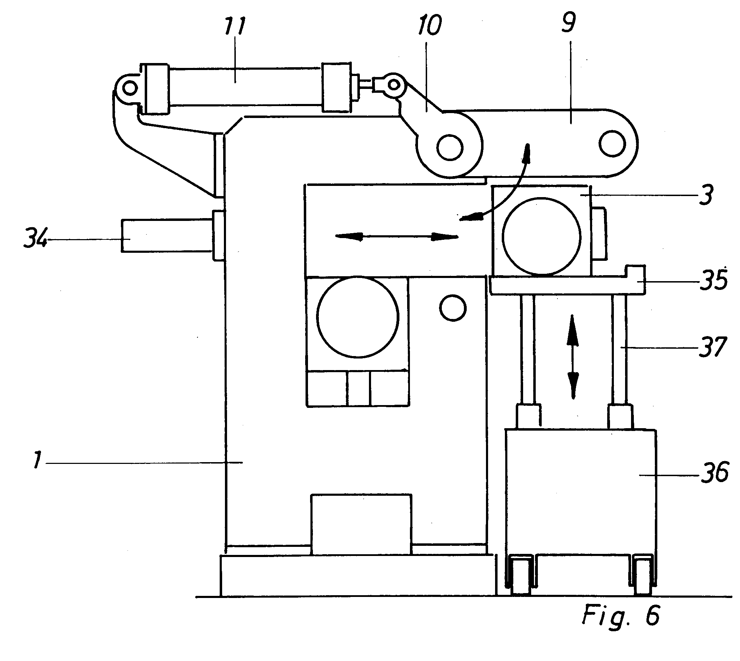

Im Ausführungsbeispiel der Fig. 5 und 6 ist die Traverse 9 als ein Teil des vertikalen Holmes 13 ausgebildet. Auch hier ist die Traverse 9 um die Achse 8 mittels eines Verschwenkhebels 10 verschwenkbar, an welchem ein Servomotor 11 angreift. Auch hier ist ein Bolzen 12 vorgesehen, der zweckmäßigerweise kegelig ausgebildet ist und der die Traverse 9 im Betriebszustand in ihrer Lage festhält.

Befindet sich die Traverse in der in Fig. 6 gezeigten Offenstellung, können die Lagerkörper 3 mittels eines Servomotors 34 durch den Freiraum aus dem Kalanderständer 1 herausgeschoben werden, der durch die Öffnung der Traverse 9 entstanden ist. Bei diesem seitlichen Herausschieben senkrecht zur Achse der Walze 2 werden die Lagerkörper auf eine Aufnahmevorrichtung 35 z.B. in Form einer Plattform oder einer Schiene (vorzugsweise von U-förmigem Querschnitt) oder einer Halterung geschoben, die auf einem Wagen 36 mit Hubvorrichtungen 37 angeordnet ist. Mit Hilfe dieses Hubwagens 36, 37 wird das ausgebaute Walzen-Lagerkörper-Aggregat weggefahren und ein anderes Aggregat herangefahren. Dieses wird dann mit Hilfe des Servomotors 34 in den Kalanderständer eingezogen. Sodann wird die Traverse wieder in ihre Betriebsstellung verschwenkt.

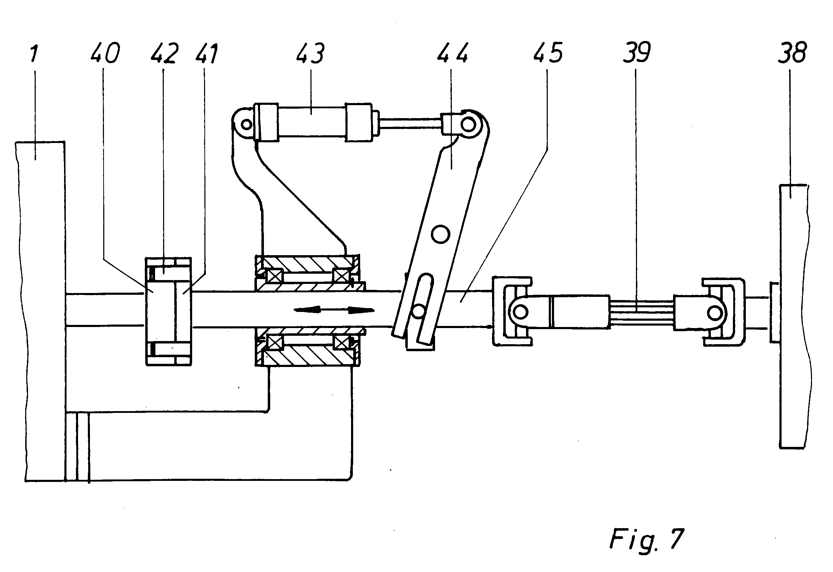

In Fig. 7 ist dargestellt, wie der Antrieb 38 bzw. dessen Getriebe über die Gelenkwelle 39 an die Kupplung 40 angekoppelt ist, deren verschiebbares Kupplungsteil 41, welches Zapfen 42 trägt, mit Hilfe des Servomotors 43, der an einer das verschiebbare Kupplungsteil 41 angreifenden Stange 44, angelenkt ist, die Verschiebung des verschiebbaren Kupplungsteiles 41 bewirkt und damit ein- und auskuppelt.

### LISTE DER BEZUGSZEICHEN

- 1: Ständer
- 2: Walze
- 3: Lagerkörper
- 4: Öffnung
- 5: Verstellvorrichtung
- 6: Walzenlager
- 7: Walzenzapfen
- 8: Achse
- 9: Traverse
- 10: Verschwenkhebel
- 11: Servomotor
- 12: Bolzen
- 13: vertikaler Holm
- 14: Servomotor
- 15: Nut
- 16: Feder
- 17: Hubwagen
- 18: Brücke mit Laufschienen
- 19: Spindelhubgetriebe
- 20: Hubspindel
- 21: Tragzapfen
- 22: Öffnung
- 23: Vorsprung
- 24: Transportwagen
- 25: Lagerbock
- 26: Ausnehmung
- 27: Hubspindelmotor
- 28: Fahrantriebsmotor
- 29: Servomotor
- 30: Vorheizbehälter
- 31: Boden
- 32: Gelenk
- 33: Abdeckhaubenhälfte
- 34: Servomotor
- 35: Aufnahmevorrichtung
- 36: Wagen
- 37: Hubvorrichtung
- 38: Antrieb / Getriebe
- 39: Gelenkwelle
- 40: Kupplung
- 41: verschiebbares Kupplungsteil
- 42: Zapfen
- 43: Servomotor
- 44: Stange
- 45: Schiebewelle
- 46: Hülsen
- 47: Hebel

## Patentansprüche

1. Kalander,
bestehend aus einem aus zwei parallel zueinander aufgestellten Ständern (1) aufgebauten Maschinengestell, in welchem mindestens zwei durch mindestens einen Motor angetriebene Walzen (2) mittels Lagern gelagert sind, von denen die Lager in Lagerkörpern (3) gelagert sind, die in den Ständern (1) unter der Einwirkung äußerer Kräfte verschiebbar sind,
bei dem Teil jedes Ständers (1) eine Traverse (9) ist, die nach Lösen von Befestigungsmitteln (12) aus dem Ständer (1) herausbewegbar ist und dann einen Freiraum (4) im Ständer (1) hinterläßt, durch den die Lagerkörper (3) mindestens einer Walze (2) zusammen mit der Walze aus dem Ständer (1) herausnehmbar und einbringbar sind,
dadurch gekennzeichnet,
daß die Traverse (9) um eine Achse (8) verschwenkbar ist,
daß Mittel (l2) für das Befestigen des der Achse (8) abgewandten Endes der Traverse (9) am Ständer (l) vorgesehen sind und
daß an jeder Traverse (9) ein Servomotor (ll) als Verschwenkmotor angreift, der sich am Ständer (l) abstützt.

2. Kalander nach Anspruch 1,
dadurch gekennzeichnet,
daß das Mittel für das Befestigen des der Achse abgewandten Endes der Traverse (9) am Ständer (1) ein vorzugsweise kegeliger Bolzen (12) oder Keil ist, der in ein Loch im Ständer (1) einschiebbar ist.

3. Kalander nach Anspruch 1,
dadurch gekennzeichnet,
daß an jeder Traverse (9) oder am Ständer (l) ein den Bolzen oder Keil verschiebender Servomotor (l4) angeordnet ist.

4. Kalander nach Anspruch l,
dadurch gekennzeichnet,
daß eine Kupplung (40) mit verschieb- oder verschwenkbaren Kupplungselementen (42) zwischen der zu wechselnden Walze (2) und deren Antrieb oder deren Getriebe (38) angeordnet ist.

5. Kalander nach Anspruch l
dadurch gekennzeichnet,
daß zwischen der zu wechselnden Walze (2) und einer Vorrichtung zum Zu- und Abführen eines Temperiermittels Verschlußkupplungen mit Rückschlagventilen angeordnet sind.

6. Kalander nach Anspruch l,
dadurch gekennzeichnet,
daß mindestens ein Servomotor (43) für die Betätigung der Kupplung(en) (40) vorgesehen ist.

7. Kalander nach Anspruch l,
dadurch gekennzeichnet,
daß die Traversen (9) die Kopfstücke der Ständer (l) oder Teile der vertikalen Holme (l3) der Ständer (l) sind.

8. Anlage zum Kalandrieren mit austauschbaren Walzen, bestehend aus einem Kalander nach Anspruch 1, einem Vorratslager für mindestens eine Austauschwalze sowie einer Wechselvorrichtung für die auszutauschende Walze,
dadurch gekennzeichnet,
daß die Wechselvorrichtung eine Hebevorrichtung (17,18) ist,
daß die Traversen (9) Kopfstücke der Ständer (l) sind und um eine Achse (8) verschwenkbar sind, und daß oberhalb des Kalanders die Hebevorrichtung (l7,l8) angeordnet ist, deren Hebemittel (l9) an die Lagerkörper (3) ankoppelbar sind, die an ihren Enden als Befestigungsmittel Hülsen (46) und Tragzapfen (2l) aufweisen, welche in eine in ihrem Querschnitt T-förmige Öffnung (22) einfahrbar sind,
wobei die Tragzapfen (21) um 90° in eine Stellung drehbar sind, in der die Tragzapfen (2l) hinter Vorsprünge (23) fassen, die durch die T-Form der Öffnung (22) gebildet sind.

9. Anlage zum Kalandrieren mit austauschbaren Walzen, bestehend aus einem Kalander nach Anspruch 1, einem Vorratslager für mindestens eine Austauschwalze sowie einer Wechselvorrichtung für die auszutauschende Walze,
dadurch gekennzeichnet,
daß die Wechselvorrichtung eine Verschiebevorrichtung ist, die Mittel zum Ergreifen der Lagerkörper (3) aufweist,
daß die Traverse (9) Teile der vertikalen Holme (l3) der Ständer (l) sind und um eine Achse (8) verschwenkbar sind,
daß die Verschiebevorrichtung (34) seitlich an den Lagerkörpern (3) angreift,
und daß eine verschieb- oder verfahrbare Vorrichtung (35,36,37) vorgesehen ist, auf die die Lagerkörper (3) heraufschiebbar sind und die die Lagerkörper (3) von unten abstützt.

## Claims

1. Calender consisting of a machine frame which is constructed of two uprights (1) erected parallel with one another, and in which at least two rollers (2) driven by at least one motor are mounted by means of bearings, the bearings of which are mounted in bearing housings (3) which are displaceable in the uprights (1) under the action of external forces, wherein part of each upright (1) is a crosspiece (9) which can be moved out of the upright (1) after fixing means (12) are released, and then leaves behind it a free space (4) in the upright (1) through which the bearing housings (3) of at least one roller (2) together with the roller can be removed from the upright (1) and introduced, characterised in that the crosspiece (9) is pivotable about a pivot (8), in that means (12) are provided for fixing the end of the crosspiece (9) remote from the pivot (8) to the upright (1) and in that a servo motor (11) supported on the upright (1) acts on each crosspiece (9) as pivoting motor.

2. Calender according to claim 1, characterised in that the means for fixing the end of the crosspiece (9) remote from the pivot to the upright (1) is a preferably conical pin (12) or wedge which can be inserted in a hole in the upright (1).

3. Calender according to claim 1, characterised in that a servo motor (14) displacing the pin or wedge is disposed on each crosspiece (9) or on the upright (1).

4. Calender according to claim 1, characterised in that a clutch (40) with displaceable or pivotable clutch elements (42) is disposed between the roller (2) to be changed and its drive or its gearbox (38).

5. Calender according to claim 1, characterised in that closing couplings with non-return valves are disposed between the roller (2) to be changed and a device for supplying and removing a tempering medium.

6. Calender according to claim 1, characterised in that at least one servo motor (43) is provided for operation of the clutch(es) (40).

7. Calender according to claim 1, characterised in that the crosspieces (9) are the heads of the uprights (1) or parts of the vertical posts (13) of the uprights (1).

8. Installation for calendering with changeable rollers, consisting of a calender according to claim 1, a storage magazine for at least one replacement roller and a changing device for the roller to be changed, characterised in that the changing device is a lifting device (17, 18), in that the crosspieces (9) are heads of the uprights (1) and are pivotable about a pivot (8), and in that above the calender is disposed the lifting device (17, 18) whose lifting means (19) can be coupled to the bearing housings (3) which at their ends exhibit fixing means in the form of sleeves (46) and carrying pins (21) which can be introduced into an opening (22) of T-shaped cross-section, the carrying pins (21) being pivotable through 90° into a position in which the carrying pins (21) engage behind projections (23) which are formed by the T-shape of the opening (22).

9. Installation for calendering with changeable rollers, consisting of a calender according to claim 1, a storage magazine for at least one replacement roller and a changing device for the roller to be changed, characterised in that the changing device is a displacing device which exhibits means for gripping the bearing housings (3), in that the crosspieces (9) are parts of the vertical posts (13) of the uprights (1) and are pivotable about a pivot (8), in that the displacing device (34) engages laterally with the bearing housings (13), and in that a displaceable or travelling device (35, 36, 37) is provided onto which the bearing housings (3) can be slid and which supports the bearing housings (3) from below.

## Revendications

1. Calandre se composant d'un bâti de machine constitué de deux montants (1) orientés parallèlement entre eux et dans lequel il est prévu au moins deux cylindres (2) entraînés par au moins un moteur et supportés à l'aide de paliers qui sont montés dans des corps de paliers (3) qui sont déplaçables dans les montants (1) sous l'action de forces extérieures, une partie de chaque montant (1) constituant une traverse (9) qui peut être sortie du montant (1) après desserrage de moyens de fixation (12) de façon à laisser subsister ensuite dans le montant (1) un volume libre (4) à travers lequel les corps de paliers (3) d'au moins un cylindre (2) peuvent être sortis du montant (1) et mis en place avec le cylindre, caractérisée en ce que la traverse (9) peut pivoter autour d'un axe (8), en ce qu'il est prévu des moyens (12) pour fixer sur le montant (1) l'extrémité de la traverse (9) qui est opposée à l'axe (8) et en ce que sur chaque traverse (9) agit un servo-moteur (11) agencé comme un moteur de pivotement, qui s'appuie contre le montant (1).

2. Calandre selon la revendication 1, caractérisée en ce que le moyen assurant la fixation de l'extrémité, opposé à l'axe, de la traverse (9) sur le montant (1) est une broche (12) de forme conique, ou un coin, qui peut être engagée dans un trou formé dans le montant (1).

3. Calandre selon la revendication 1, caractérisée en ce qu'il est prévu sur chaque traverse (9) ou sur le montant (1) un servo-moteur (14) assurant le déplacement de la broche ou du coin.

4. Calandre selon la revendication 1, caractérisée en ce qu'un accouplement (40), comportant des éléments d'accouplement (42) déplaçables par translation ou par pivotement, est disposé entre le cylindre à remplacer (2) et son entraînement ou sa transmission (38).

5. Calandre selon la revendication 1, caractérisée en ce qu'il est prévu entre le cylindre à remplacer (2) et un dispositif servant à l'introduction et à l'évacuation d'un agent de températion des accouplements de fermeture comportant des soupapes antiretour.

6. Calandre selon la revendication 1, caractérisée en ce qu'il est prévu au moins un servo-moteur (43) pour l'actionnement du ou des accouplements (40).

7. Calandre selon la revendication 1, caractérisée en ce que les traverses (9) sont constituées par les pièces de têtes des montants (1) ou par des parties des membrures verticales (13) des montants (1).

8. Installation de calandrage avec cylindres remplaçables, se composant d'une calandre selon la revendication 1, d'un appui de stockage pour au moins un cylindre de remplacement et également d'un dispositif de remplacement de cylindres, caractérisée en ce que le dispositif de remplacement est un dispositif de levage (17, 18), en ce que les traverses (8) sont des pièces de têtes des montants (1) et peuvent pivoter autour d'un axe (8) et en ce qu'au-dessus de la calandre est disposée le dispositif de levage (17, 18) dont des moyens de levage (19) peuvent être accouplés avec les corps de paliers (3), qui comportent à leurs extrémités, comme moyens de fixation, des manchons (46) et des tourillons porteurs (21), qui peuvent être engagés dans l'ouverture correspondante (22) à section à forme de T, dans laquelle les tourillons porteurs (21) pouvant être amenés par rotation de 90° dans une position où ces tourillons porteurs (21) s'accrochent en arrière de saillies (23) qui sont créées par la forme en T de l'ouverture (22).

9. Installation de calandrage avec cylindres remplaçables, se composant d'une calandre selon la revendication 1, d'un appui de stockage pour au moins un cylindre de remplacement et également d'un dispositif de remplacement de cylindres, caractérisée en ce que le dispositif de remplacement est un dispositif de translation comportant des moyens servant à saisir les corps de paliers (3), en ce que les traverses (9) constituent des parties des membrures verticales (13) des montants (1) et peuvent pivoter autour d'un axe (8), en ce que le dispositif de translation (34) s'accroche latéralement sur les corps de paliers et en ce qu'il est prévu un dispositif (35, 36, 37) déplaçable par translation ou linéairement, sur lequel peuvent être engagés les corps de paliers (3) et qui soutient par le bas lesdits corps de paliers (3).
